# EUROPÄISCHE PATENTSCHRIFT

(11) **EP 2 395 409 B1**
(45) Veröffentlichungstag und Bekanntmachung des Hinweises auf die Patenterteilung: **13.03.2019**
(21) Anmeldenummer: 11004547.3
(22) Anmeldetag: 03.06.2011
(51) Int. Cl.: G05D 1/12

(54) **Verfahren und Vorrichtung zum Steuern eines Lenkflugkörpers**
Method and device for controlling a guided missile
Procédé et dispositif destinés à la commande d'un missile guidé

(30) Priorität: 11.06.2010 DE 102010023449
(43) Veröffentlichungstag der Anmeldung: 14.12.2011
(73) Patentinhaber: Diehl Defence GmbH & Co. KG, 88662 ÜBERLINGEN (DE)
(72) Erfinder: Kuhn, Thomas, Dr., 88633 Heiligenberg (DE); Ganser, Michael, 88045 Friedrichshafen (DE)
(74) Vertreter: Diehl Patentabteilung

(56) Entgegenhaltungen:
- WO-A2-2007/089243
- DE-A1- 19 957 363
- US-A- 5 637 826

## Beschreibung

Die Erfindung betrifft ein Verfahren zum Steuern eines Lenkflugkörpers, der ein Prozessmittel und einen Datenspeicher aufweist, bei dem das Prozessmittel Steuerdaten zur Steuerung des Lenkflugkörpers auf einer Flugbahn abruft und den Flug des Lenkflugkörpers unter Verwendung der Steuerdaten steuert.

In modernen Systemen zur Luftabwehr werden zunehmend autonom gelenkte Flugkörper eingesetzt, die nach ihrem Start eigenständig ihr Ziel suchen und nicht mehr auf eine Beleuchtung des Ziels, beispielsweise durch ein Trackingradar, angewiesen sind. Solche Lenkflugkörper verwenden zum präzisen Endanflug auf das Ziel entweder einen passiven Sucher, beispielsweise einen Infrarot-Sucher, der mit Hilfe einer Bildverarbeitung das vorgegebene Ziel selbständig erkennt, oder aktive Sucher, die das Ziel selbst beleuchten. In beiden Fällen müssen die Lenkflugkörper das Ziel selbständig erfassen. Ist die Reichweite des Lenkflugkörpers größer als deren Auffassungsreichweite, also die Reichweite, innerhalb der der Lenkflugkörper das Ziel selbständig erfassen kann, so muss der Lenkflugkörper zumindest bis zum Erreichen der Auffassungsreichweite an das Ziel herangeführt werden, sodass anschließend ein sogenannter Lock-On-After-Launch (LOAL) durchgeführt werden kann. Der Lenkflugkörper kann nun während des Flugs das Ziel selbständig erfassen, verfolgen und bekämpfen. Andere Systeme sind zum Beispiel in den Druckschriften WO 2007/089243 A2 und US 5,637,826 offenbart.

Es ist eine Aufgabe der vorliegenden Erfindung, ein Verfahren zum Steuern eines Lenkflugkörpers anzugeben, mit dem der Lenkflugkörper effizient an das Ziel herangeführt werden kann.

Diese Aufgabe wird durch ein Verfahren der eingangs genannten Art gelöst, bei dem erfindungsgemäß im Datenspeicher Flugbahn beschreibende Bahndaten zu einer Mehrzahl von unterschiedlichen Flugbahnen abgelegt sind und das Prozessmittel unter Verwendung von Zieldaten Bahndaten zu einer der mehreren Flugbahnen als die Steuerdaten aus dem Datenspeicher auswählt.

Die Erfindung geht von der Überlegung aus, dass der Lenkflugkörper bis zum Erreichen der Auffassungsreichweite einen Lenkmodus benötigt, der den Lenkflugkörper nicht nur relativ präzise, sondern auch unter Berücksichtigung einer Reihe von Randbedingungen in den Bereich der Auffassungsreichweite führt. Solche Randbedingungen können sein:
- das Ziel möglichst frühzeitig zu treffen,
- das Ziel mit möglichst hoher Annäherungsgeschwindigkeit zu treffen,
- der Lenkflugkörper sollte mit möglichst maximaler kinetischer Energie in eine Flugendphase überführt werden, um eine hohe Manövrierfähigkeit des Lenkflugkörpers zu erreichen, was zu einer höheren Trefferwahrscheinlichkeit führt; die Flugendphase kann durch einen vorgegebenen Abstand oder eine vorgegebene Restflugzeit des Lenkflugkörpers zum Ziel definiert sein,
- eine möglichst energiegünstige Flugbahn, die bei mittleren und großen Reichweiten üblicherweise eine überhöhte Form aufweist, um die geringere Luftdichte in großen Höhen auszunutzen,
- eine Gestaltung der Flugbahn in der Weise, dass der Lenkflugkörper so an das Ziel herangeführt wird, dass der Sucher möglichst gute Bedingungen zur Aufschaltung auf das Ziel hat; so sollte beispielsweise ein tief fliegendes Ziel nach Möglichkeit unter einem bestimmten Winkelbereich gegenüber der Erdoberfläche oder Wasseroberfläche vom Sucher erkannt werden, um Effekte wie Mehrwegeausbreitung oder Clutter so weit wie möglich zu unterdrücken, um nicht durch ein Spiegelbild des Ziels abgelenkt zu werden,
- die Flugbahn sollte so geformt sein, dass ein schnell fliegendes Ziel möglichst von vorne bekämpft wird, da hierbei die Auftreffwahrscheinlichkeit und Auftreffenergie eines Wirkmittels erheblich größer ist als beispielsweise bei einer Bekämpfung von der Seite.

Solche Randbedingungen machen die Berechnungen einer guten Flugbahn zu einem rechenintensiven Unterfangen. Insbesondere bei einem Anflug auf ein bewegtes Ziel ist die Flugbahn unter Berücksichtigung der sich verändernden Relativposition des Ziels zum Lenkflugkörper und der Randbedingungen in einem engen Zeitraster immer neu zu berechnen. Dies ist nur mit einer sehr hohen Rechenkapazität möglich.

Durch das erfindungsgemäße Verfahren kann die aufwändige Berechnung der Flugbahnen unter Berücksichtigung von einer oder mehrerer der oben aufgezählten und/oder weiteren Randbedingungen vor dem Start des Flugkörpers vorgenommen werden, so dass während des Flugs auf bereits vorhandene Bahndaten zurückgegriffen werden kann. Hierdurch kann der Rechenaufwand während des Flugs gering gehalten werden, so dass das Prozessmittel günstig ausgelegt sein kann. Durch die weitgehende Berücksichtigung von wichtigen Randbedingungen kann der Flugkörper außerdem effektiv zum Ziel geführt werden. Weiter können die Bahndaten jeweils optimale Flugtrajektorien zur Zielannäherung in Abhängigkeit von der Relativposition des Flugkörpers zum Ziel beinhalten und somit können außerdem optimale Flug und Zielbedingungen für den Flugkörper hergestellt werden. Da vor dem Einsatz des Lenkflugkörpers im Wesentlichen beliebig viel Zeit für eine Offline-Simulation des Fluges des Lenkflugkörpers zum Ziel und zur Erstellung der Bahndaten vorhanden ist, können alle denkbaren oder sinnvollen Randbedingungen als Kriterien einer numerischen, modellbasierten Optimierung für eine Vielzahl möglicher Missionen bestimmt werden, sodass jeweils eine optimale Flugbahn anhand der abgespeicherten Bahndaten abgeflogen werden kann.

Die vorab bestimmten Bahndaten werden in der Datenbank abgelegt, um im operationellen Einsatz geeignet ausgewählt und zur Steuerung des Flugs des Lenkflugkörpers verwendet zu werden. Die offline bzw. vor einem Einsatz des Lenkflugkörpers erzeugten Bahndaten werden für einen festgelegten Definitionsraum erzeugt und im Datenspeicher abgelegt, sodass sie der Flugsoftware des Lenkflugkörpers zur Verfügung stehen. Der Definitionsraum ist zweckmäßigerweise ein zumindest zweidimensionaler Ortsraum aus horizontalem Abstand und vertikaler Höhe eines voraussichtlichen Zielpunkts (Predicted Impact Point, PIP) zu einem Abschuss- bzw. Startpunkt oder einem aktuellen Aufenthaltspunkt des Lenkflugkörpers.

Der Lenkflugkörper ist zweckmäßigerweise eine Boden-Luft-Rakete, die aus einem stationären Startgerät, beispielsweise einer Abschussrampe auf einem LKW oder einem Schiff, abgeschossen wird. Das Prozessmittel ist vorteilhafterweise dazu vorbereitet, die Durchführung der oben genannten Verfahrensschritte und auch weitere im Folgenden noch beschriebene Verfahrensschritte zu steuern. Eine solche Vorbereitung kann durch ein entsprechendes Steuerprogramm des Prozessmittels vorliegen, dessen Ablauf - beispielsweise in Verbindung mit geeigneten Eingangssignalen, wie Sensorsignalen - eine entsprechende Steuerung bewirkt. Hierzu umfasst das Prozessmittel zweckmäßigerweise elektronische Elemente, wie einen Prozessor und Datenspeicher, die zum Ablaufen des Steuerprogramms notwendig sind. Der Datenspeicher kann ein Read-Only-Memory (ROM) sein, auf das das Prozessmittel datentechnischen Zugriff hat. Die Steuerung des Lenkflugkörpers durch das Prozessmittel kann das Ansteuern entsprechender Aktuatoren des Lenkflugkörpers mit Hilfe von Steuersignalen des Prozessmittels beinhalten.

Zweckmäßigerweise liegen die Bahndaten im Datenspeicher in einer solchen Form vor, dass zu jeder Flugbahn jeweils ein Datensatz, insbesondere genau ein Datensatz, vorhanden ist dessen Bahndaten diese Flugbahn beschreiben. Auf diese Weise kann das Prozessmittel einen Datensatz aus mehreren aussuchen und für die Steuerung des Lenkflugkörpers verwenden. Zweckmäßigerweise sind die Flugbahnen jeweils von einem Startpunkt, der für alle Flugbahnen der selbe ist, bis zu einem Zielpunkt angelegt, der für jede Flugbahn individuell verschieden ist, sodass die Vielzahl von unterschiedlichen Flugbahnen von einem Startort zu einer Vielzahl unterschiedlicher Zielpunkte führen, wobei jeder Zielpunkt das Ende einer entsprechenden Flugbahn markiert. Die Flugbahnen sind zweckmäßigerweise zumindest überwiegend auf unterschiedlichen Flugrouten geführt, sie liegen also zumindest überwiegend nicht auf einer einzigen Flugroute. Die Bahndaten enthalten zweckmäßigerweise zu jeder Flugbahn vorgegebene Bahnparameter, beispielsweise charakteristische Punkte, eine Bahnfunktion, Bahnkoeffizienten und dergleichen, und die Gesamtflugzeit vom Startpunkt zum Zielpunkt.

Bei der Berechnung der Bahndaten werden zweckmäßigerweise neben den Randbedingungen auch Beschränkungen und spezifische Eigenschaften des Lenkflugkörpers berücksichtigt. Die Bahndaten sind auf diese Weise an den Lenkflugkörper angepasst und können ein detailliertes Schubprofil des Lenkflugkörpers, dessen Aerodynamik, dessen Gewicht, insbesondere unter Berücksichtigung verschiedener Wirkladungen, dessen Aerodynamik und andere Faktoren berücksichtigen. Auch diskrete Flugereignisse, die die Flugeigenschaften des Lenkflugkörpers beeinflussen, wie der Zeitpunkt eines Haubenabwurfs, können berücksichtigt werden. Zweckmäßigerweise wird das komplette Flügverhalten des Lenkflugkörpers berücksichtigt, insbesondere in einem Flugkörper-Modell.

Das vorgeschlagene Verfahren kann somit Randbedingungen zur Maximierung der Auffassungs- und Bekämpfungswahrscheinlichkeit explizit vor einem Einsatz des Lenkflugkörpers berücksichtigen und für nicht manövrierende Ziele bereits von sich aus die optimale Begegnungssituation herstellen. Im Falle manövrierender Ziele kann das Verfahren sehr flexibel durch eine Aktualisierung des voraussichtlichen Zielpunkts und eine entsprechende Änderung der Bahndaten oder der abzufliegenden Trajektorie reagieren. Hierdurch kann der Lenkflugkörper mit geringem Rechenaufwand auf einer vorteilhaften Flugbahn ins Ziel geführt werden.

In einer vorteilhaften Ausführungsform der Erfindung werden die Bahndaten aus einem Startpunkt und einem Zielpunkt des Lenkflugkörpers errechnet und im Datenspeicher abgelegt. Hierdurch kann ein Online-Rechenaufwand während eines Flugs des Lenkflugkörpers entfallen oder zumindest gering gehalten werden. Zweckmäßigerweise werden die Bahndaten vor einem ersten Einsatz des Lenkflugkörpers berechnet und im Datenspeicher abgelegt. Es ist möglich, die Bahndaten zunächst in den Datenspeicher abzulegen und erst dann den Datenspeicher in den Lenkflugkörper einzufügen und erst danach den Lenkflugkörper in Dienst zu stellen. Vorteilhafterweise werden bei der Berechnung der Bahndaten neben dem Start- und Zielpunkt auch ein Modell des Lenkflugkörpers und insbesondere Bedingungen zum Auftreffen des Lenkflugkörpers im Ziel berücksichtigt. Durch das Vorhandensein von im Wesentlichen beliebig viel Zeit zur Erstellung der Bahndaten kann das Modell des Lenkflugkörpers beliebig detailliert sein.

Die Bahndaten können zur Beschreibung der Flugbahn den Sollbahnwinkel in Abhängigkeit von der Flugzeit beinhalten. So kann in Abhängigkeit von den Zieldaten der Sollbahnwinkel als Zeitplan vorgegeben und abgeflogen werden. Der Sollbahnwinkel bezieht sich auf eine vorgegebene Richtung, beispielsweise die Horizontale, wobei die Horizontale und Vertikale so verstanden werden, dass die Schwerkraft die Vertikale vorgibt und die Horizontale senkrecht zur Schwerkraft ist. Ein Istbahnwinkel kann durch entsprechende Sensoren des Lenkflugkörpers erfasst werden und das Prozessmittel kann eine fortwährende Regelung des Istbahnwinkels auf den Sollbahnwinkel steuern.

Dem gegenüber wird in einer vorteilhaften Ausführungsform der Erfindung vorgeschlagen, dass die Bahndaten jeweils die Trajektorien der ihnen zugeordneten Flugbahn enthalten. Als Trajektorie wird eine Raumkurve verstanden die kontinuierlich, insbesondere als Polynom, oder quasi kontinuierlich diskret beschrieben sein kann. Eine quasi kontinuierliche Beschreibung liegt vor, wenn die Raumkurve anhand einer hinreichenden Anzahl von Stützstellen, insbesondere von zumindest fünf Stützstellen pro Sekunde Flugzeit des Lenkflugkörpers auf der Raumkurve, beschrieben ist. Während eine Flugbahn allgemein durch verschiedene Daten, beispielsweise einen Sollbahnwinkel, beschrieben sein kann, stellt die Trajektorie die Flugbahn explizit als Raumkurve dar. Sie stellt somit Ortsdaten zur Verfügung, die direkt abgeflogen werden können, sodass ein Vergleich zwischen Ist-Ortsdaten und den Ortsdaten der Trajektorie möglich ist und eine Steuerung des Lenkflugkörpers entlang den vorgegebenen Ortsdaten erfolgen kann.

Vorteilhafterweise umfassen die Bahndaten auch die erste und insbesondere die zweite Ortsableitung der Trajektorie, also deren Steigung beziehungsweise Bahnwinkel und deren Krümmung. Zur Vereinfachung der Bahndaten können diese die Trajektorie auf die Vertikalebene reduziert beschreiben, sodass die Trajektorie in einer vertikalen Ebene verläuft. Bei einer Steuerung des Lenkflugkörpers entlang der Trajektorie kann das Prozessmittel anhand des Zielpunkts diejenige Trajektorie aus dem Datenspeicher auswählen, deren Endpunkt dem Zielpunkt am nächsten kommt. Anhand der Bahndaten beziehungsweise den Ortsdaten der Trajektorie im Raum kann der Lenkflugkörper den Flug entlang der Trajektorie steuern.

Wie oben beschrieben sind im Datenspeicher Bahndaten zu einer Vielzahl von unterschiedlichen Flugbahnen beschrieben, deren Endpunkte in unterschiedlicher Entfernung und Höhe relativ zum Startpunkt des Lenkflugkörpers liegt. Hierbei sind die Bahndaten, die im Datenspeicher abgelegt sind, zweckmäßigerweise Bahndaten zu Flugbahnen, die zu einem Raumraster von Zielpunkten führen. Das Raumraster kann ein zweidimensionales Raumraster mit den Koordinaten horizontaler Entfernung und vertikaler Höhe sein, wobei die Höhenkoordinate unterhalb, auf gleicher Höhe oder oberhalb des Startpunkts beginnen und nach oben fortgesetzt werden kann. Das Raumraster ist zweckmäßigerweise ein regelmäßiges Raster, insbesondere mit zumindest 4 x 4 Raumpunkten, sodass die Endpunkte der Flugbahnen, z.B. der Trajektorien, in einem regelmäßigen Abstand voneinander im Raum liegen. Raumpunkte des Rasters, die zusätzlich zu den regelmäßig zueinander angeordneten Raumpunkten vorhanden sind, z.B. als Zwischenpunkte, stören die Regelmäßigkeit in dem hier betrachteten Sinne nicht.

Insbesondere führen eine Vielzahl von Flugbahnen von einem einzigen Startpunkt aus zum Raumraster. Es können hierbei Flugbahnen bzw. deren Bahndaten von mehreren Startpunkten aus vorhanden sein, die insbesondere auf verschiedenen geografischen Höhen liegen. z.B. liegt ein Startpunkt auf Meereshöhe und ein zweiter Startpunkt auf 3000 m über Meershöhe. Die Raumkurven bzw. deren Bahndaten können von jedem Startpunkt zu allen Zielpunkten des gleichen Raumrasters führen, insbesondere jedoch nur zu Zielpunkten, die gleich hoch oder höher gelegen sind als der jeweilige Startpunkt.

Das Prozessmittel wählt die Bahndaten zu einer Flugbahn insbesondere vor einem Start des Lenkflugkörpers anhand von Zieldaten, beispielsweise dem Zielpunkt des zugewiesenen Ziels, aus. Hierbei kann es vorkommen, dass der vorgegebene Zielpunkt, der dem Lenkflugkörper beispielsweise von einem Flugleitsystem vorgegeben wird, zwischen zwei oder mehr Endpunkten von Flugbahnen liegt, deren Bahndaten im Datenspeicher abgelegt sind. Um aus den vorgegebenen Bahndaten solche zu gewinnen, deren Flugbahn möglichst nah oder im vorgegebenen Zielpunkt liegt, ist es vorteilhaft, wenn das Prozessmittel die ausgewählten Bahndaten nach dem Auswählen aus dem Datenspeicher so modifiziert, dass sie als neue Bahndaten eine veränderte Flugbahn beschreiben. Das Modifizieren kann geschehen durch Koeffizientenvariation des die Flugbahn beschreibenden Polynoms und/oder durch Interpolation zwischen zwei oder mehr Flugbahnen beziehungsweise deren Bahndaten. Anschließend steuert das Prozessmittel den Flug des Lenkflugkörpers anhand der neuen Bahndaten, also entlang der veränderten Flugbahn, deren Endpunkt nah oder im Zielpunkt liegt.

Bei einem Anflug des Lenkflugkörpers auf ein bewegtes Ziel wird die Bewegung des Ziels bei der Berechnung des voraussichtlichen Zielpunkts, also dem Punkt, an dem der Lenkflugkörper das Ziel voraussichtlich erreicht, berücksichtigt. Hierbei wird in der Regel von einer gradlinigen oder gleichförmigen Bewegung des bewegten Ziels auszugehen sein, es sei denn, dass das Bewegungsmuster des Ziel von vorneherein bekannt ist und berücksichtigt werden kann. Ist dies nicht der Fall und das Ziel bewegt sich in einer unvorhergesehenen Weise anders als angenommen, so verändert sich auch die Lage des voraussichtlichen Zielpunkts im Raum in unvorhergesehener Weise. Zum Erhalt einer vorteilhaften Flugbahn ist es dann vorteilhaft, den voraussichtlichen Zielpunkt neu zu bestimmen und die Flugbahn so zu verändern, dass ihr Endpunkt im neuen voraussichtlichen Zielpunkt liegt. Dies kann durch einen iterativen Berechnungsprozess geschehen.

Zunächst kann aus Zieldaten, die beispielsweise von extern an den Lenkflugkörper übermittelt werden, ein neuer voraussichtlicher Zielpunkt berechnet werden. Anschließend kann das Prozessmittel die Bahndaten wahrend des Flugs des Lenkflugkörpers anhand des neuen Zielpunkts so modifizieren, dass die Bahndaten eine veränderte Flugbahn beschreiben. Mit Hilfe der veränderten Flugbahn kann die Flugzeit bis zum Erreichen des voraussichtlichen Zielpunkts berechnet werden. Anhand einer voraussichtlichen Bewegung des Ziels und der Restflugzeit kann die Lage des voraussichtlichen Zielpunkts korrigiert werden. Nun kann die Flugbahn beziehungsweise deren Bahndaten an den korrigierten Zielpunkt angepasst werden. Die Iterationsschleife: Ermitteln der Restflugzeit, Ermitteln des korrigierten voraussichtlichen Zielpunkts und Anpassen der Flugbahn beziehungsweise der Flugdaten an den neuen Zielpunkt, kann nun so oft wiederholt werden, bis der Endpunkt der im iterativen Prozess bestimmten Flugbahn und der neue Zielpunkt ausreichend nahe beieinander liegen. Anschließend kann das Prozessmittel den Flug des Lenkflugkörpers anhand der Flugbahn bzw. deren Bahndaten steuern. Hierbei wird zweckmäßigerweise der Flug so korrigiert, dass der Lenkflugkörper auf die neue Flugbahn gesteuert wird und anschließend entlang dieser Flugbahn fliegt, gegebenenfalls bis zu einer erneuten Korrektur der Flugbahn.

Die Korrektur der Flugbahn kann anhand einer Korrektur bzw. Modifikation der Bahndaten geschehen. Bei einer größeren Korrektur des voraussichtlichen Zielpunkts kann es jedoch vorteilhaft sein, auf andere Bahndaten aus dem Datenspeicher zurückzugreifen, da die mit diesen anderen Daten beschriebene Flugbahn näher am neuen voraussichtlichen Zielpunkt endet, als die Flugbahn der zuvor aus dem Datenspeicher ausgewählten Bahndaten. Es wird daher in einer weiteren Ausführungsform der Erfindung vorgeschlagen, dass das Prozessmittel während des Flugs andere Bahndaten zu einer anderen Flugbahn aus dem Datenspeicher auswählt, deren Zieldaten näher oder einer anderen Form günstiger am voraussichtlichen Zielpunkt liegen, als die Zieldaten der zuvor ausgewählten Bahndaten und das Prozessmittel den Flugkörper unter Verwendung der anderen Bahndaten steuert. Die Zieldaten der ausgewählten Bahndaten beschreiben zweckmäßigerweise den Endpunkt der entsprechenden Flugbahn.

Zur Bestimmung des voraussichtlichen Zielpunkts wird in der Regel das Bestimmen der Restflugzeit erforderlich sein. Als Restflugzeit kann die Planflugzeit angenommen werden, die die Gesamtflugzeit abzüglich der geflogenen Zeit ist, wobei die Gesamtflugzeit aus den Bahndaten der entsprechenden Flugbahn entnommen werden kann. Je näher der Lenkflugkörper jedoch zum Ziel kommt, desto genauer kann die Restflugzeit als Anflugzeit bestimmt werden, die mit Hilfe von Sensordaten zumindest eines Sensors des Lenkflugkörpers oder Positionsdaten des Lenkflugkörpers ermittelt werden kann. Es ist daher vorteilhaft, wenn das Prozessmittel während des Flugs die Restflugzeit zum Zielpunkt anhand einer Wichtung aus Planflugzeit und Anflugzeit bestimmt. Hierbei sollte die Anflugzeit mit größer werdender geflogener Zeit immer stärker gewichtet werden.

Die Erfindung ist außerdem gerichtet auf eine Vorrichtung zum Steuern eines Lenkflugkörpers mit einem Datenspeicher und einem Prozessmittel, das dazu vorbereitet ist, Steuerdaten zur Steuerung des Lenkflugkörpers auf einer Flugbahn aus dem Datenspeicher abzurufen und den Flug des Lenkflugkörpers anhand der Bahndaten zu steuern.

Es wird vorgeschlagen, dass erfindungsgemäß im Datenspeicher Flugbahn beschreibende Bahndaten zu einer Mehrzahl von unterschiedlichen Flugbahnen abgelegt sind und das Prozessmittel dazu vorbereitet ist, unter Verwendung von Zieldaten Bahndaten zu einer der mehreren Flugbahnen als Steuerdaten auszuwählen.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: eine Flugbahn eines Lenkflugkörpers durch eine Landschaft von einem Startgerät bis zu einem voraussichtlichen Zielpunkt,
- Fig. 2: eine schematische Darstellung des Lenkflugkörpers,
- Fig. 3: ein Ablaufdiagramm eines Verfahrens zum Steuern des Lenkflugkörpers,
- Fig. 4: eine detailliertere Darstellung eines iterativen Schritts innerhalb des Ablaufdiagramms aus Fig. 3 und
- Fig. 5: ein schematisches Diagramm mit einer Anzahl von Flugbahnen, deren Bahndaten im Datenspeicher abgelegt sind.

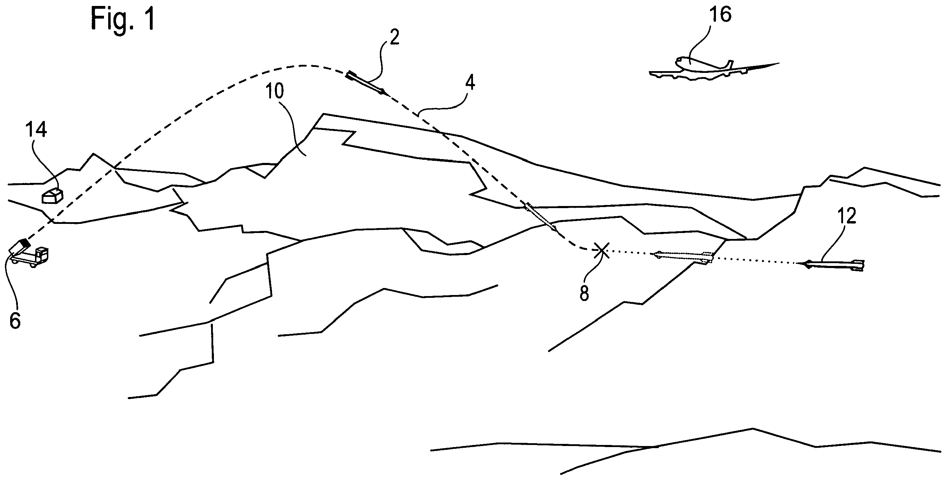

Fig. 1 zeigt einen Lenkflugkörper 2, der als Boden-Luft-Abwehrrakete ausgeführt ist, auf einer Flugbahn 4, die von einem Startgerät 6 zu einem voraussichtlichen Zielpunkt 8 durch eine Landschaft 10 geführt ist. Das Startgerät 6 ist ein LKW mit einer Starteinrichtung für eine Vielzahl von Boden-Luft-Abwehrraketen, wobei es ebenso gut denkbar ist, den Lenkflugkörper 2 von einem Schiff aus zu starten. Der Zielpunkt 8 ist derjenige Ort im Raum, an dem der Lenkflugkörper 2 voraussichtlich sein Ziel 12 trifft, das in dem gezeigten Ausführungsbeispiel ein Flugkörper ist, der durch den Lenkflugkörper 2 bekämpft werden soll.

Der Zielpunkt 8 errechnet sich aus der Bewegung des Ziels 12, dem Startzeitpunkt des Lenkflugkörpers 2 vom Startgerät 6 und der voraussichtlichen Flugdauer des Lenkflugkörpers 2 bis zum Zielpunkt 8. Diese Daten können von einer Feuerleitstelle 14 oder vom Startgerät 6 berechnet werden. Anschließend wird der voraussichtliche Zielpunkt 8 dem Lenkflugkörper 2 mitgeteilt und der Lenkflugkörper 2 wird gestartet, wobei auch eine umgekehrte Reihenfolge denkbar ist. Die Bewegung des Ziels 12 kann durch einen externen Sensor 16, beispielsweise an Bord eines Flugzeugs, überwacht werden, der seine Daten an die Feuerleitstelle 14 oder das Startgerät 6 oder unmittelbar an den Lenkflugkörper 2 gibt. In den ersteren beiden Fällen kann die Bewegung des Ziels 12 von der Feuerleitstelle 14 bzw. dem Startgerät 6 an den Lenkflugkörper 2 übermittelt werden, damit dieser wie im Folgenden beschrieben ist, den voraussichtlichen Zielpunkt 8 neu berechnen kann.

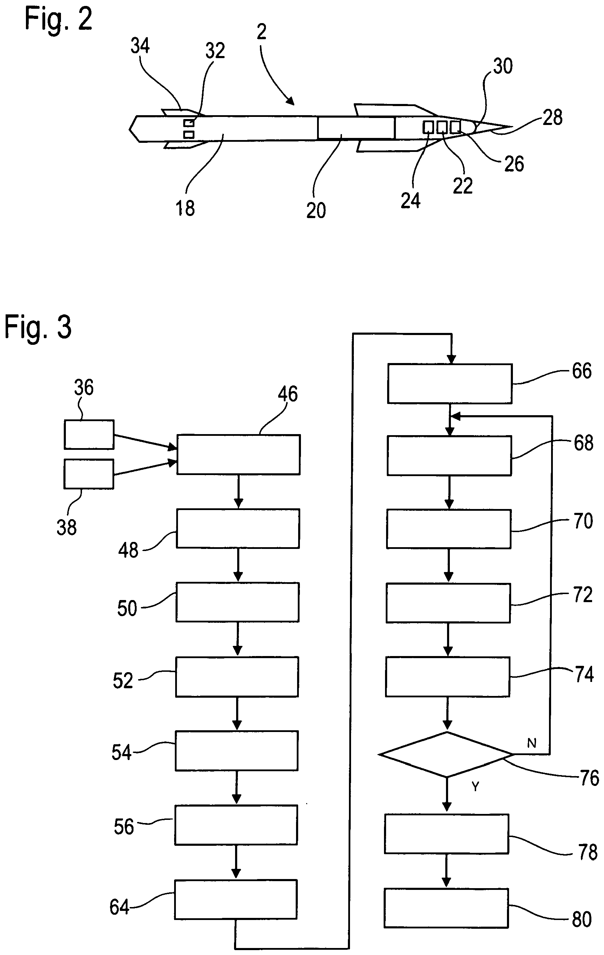

Fig. 2 zeigt den Lenkflugkörper 2 in einer vergrößerten und schematischen Darstellung. Der Lenkflugkörper 2 umfasst ein Triebwerk 18, eine Wirkladung 20, ein Prozessmittel 22, einen Datenspeicher 24, einen Suchkopf 26 und eine Haube 28, die einen transparenten Dom 30 während des Anflugs auf das Ziel 12 schützt. Mit Hilfe von schematisch angedeuteten Aktuatoren 32 zur Bewegung von Leitflügeln 34 kann das Prozessmittel 22 den Flug des Lenkflugkörpers 2 steuern.

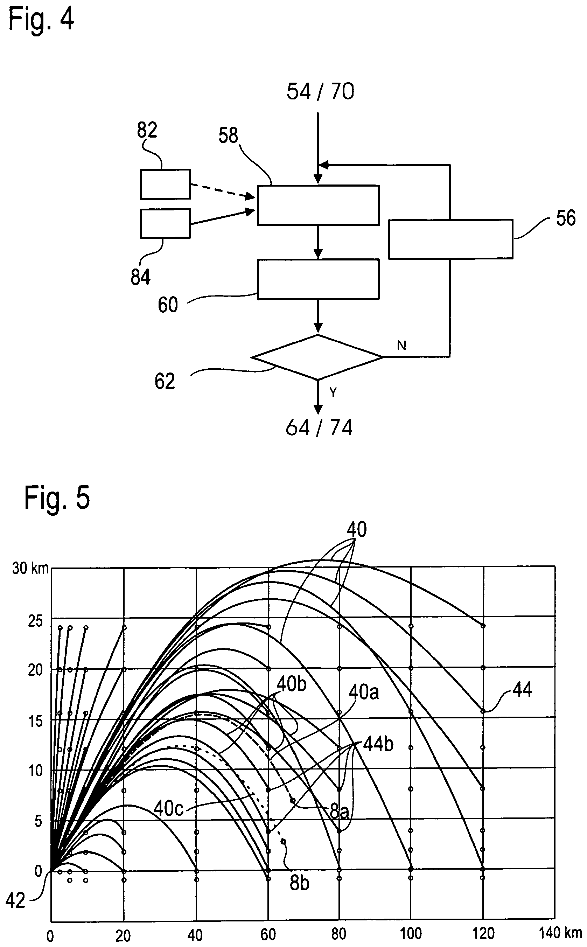

Ein Verfahren zum Steuern des Lenkflugkörpers 2 wird im Folgenden anhand eines Ablaufdiagramms, das in Fig. 3 und Fig. 4 dargestellt ist, und einem in Fig. 5 dargestellten Diagramm erläutert.

Vor dem Laden des Lenkflugkörpers 2 in das Startgerät 6 werden aus Daten 36 des Lenkflugkörpers 2 und Ladungsdaten 38, die ein Gewicht und eine Art der Wirkladung 20 beschreiben können, einer Anzahl von Trajektorien 40 in einem Schritt 46 errechnet, von denen einige beispielhaft in Fig. 5 dargestellt sind. Die Trajektorien 40 beginnen alle in einem fiktiven Startpunkt 42 und enden jeweils in einem Endpunkt 44, wobei jeder Trajektorie 40 ein anderer Endpunkt 44 zugewiesen ist. Bei dem in Fig. 5 dargestellten Diagramm sind aus Gründen der Übersichtlichkeit nicht zu jedem Endpunkt 44 jeweils eine Trajektorie 40 dargestellt, wobei jedoch zu jedem Endpunkt 44 eine Trajektorie 40 bestimmt und im Datenspeicher 24 abgelegt wird. Zu jeder Trajektorie 40 werden Bahndaten in Form eines Polynoms errechnet und zu jeder Trajektorie 40 wird ein Datensatz mit dem Polynom, der Flugzeit vom Startpunkt 42 bis zum entsprechenden Endpunkt 44 und gegebenenfalls weitere Daten hinterlegt.

Die Endpunkte 44 sind in diesem Ausführungsbeispiel in Form eines zweidimensionalen und hier regelmäßigen Rasters angeordnet, dessen erste Dimension die Entfernung vom Startpunkt 42 zum jeweiligen Endpunkt 44 in horizontaler Richtung zwischen 20 km und 140 km und die vertikale Höhe der Endpunkte 44 über dem Startpunkt 42 in Schritten von 4 km umfasst, wobei insbesondere bei geringen Entfernungen und geringen Höhen weitere Endpunkte 44 hinzugefügt sind, wie in Fig. 5 dargestellt ist. Die Berechnung der Trajektorien 40 erfolgt offline und außerhalb des Flugkörpers 2. Aus den Trajektorien 40 werden die Bahndaten errechnet. Darin sind die Trajektorien 40 als Polynome dritter Ordnung beschrieben. Die Bahndaten umfassen außerdem die ersten beiden Ableitungen der Trajektorien 40 und die Gesamtflugzeit für jede Trajektorie 40. Bei der Berechnung der Trajektorien werden einige oder alle der oben aufgezählten Randbedingungen berücksichtigt, wobei jede Kombination von Randbedingungen möglich ist. Außerdem werden eine zulässige Gipfelhöhe und eine Mindesthöhe der Trajektorien 40 berücksichtigt. Auch wird definiert, welche Entfernung des Zielpunkt 8 vom Endpunkt 44 noch als Treffer akzeptiert wird. In einem weiteren Schritt 48 werden die vielen Datensätze mit den Bahndaten in den Datenspeicher 24 des Lenkflugkörpers 2 eingeschrieben.

Ausgerüstet mit dem Datenspeicher 24, der die Bahndaten zu den Trajektorien 40 enthält, wird der Lenkflugkörper 2 in einem Schritt 50 in das Startgerät 6 geladen und dort für einen Start bereitgestellt. Vor dem Start des Lenkflugkörpers 2 aus dem Startgerät 6 wird dem Lenkflugkörper 2 im Schritt 52 ein Ziel 12 zugewiesen. Hierzu werden dem Lenkflugkörper 2 Daten zum Ziel 12 übermittelt, insbesondere dessen Position und Bewegung in Form von Bewegungsrichtung und Bewegungsgeschwindigkeit zu einem mitgeteilten Zeitpunkt. Außerdem wird dem Lenkflugkörper ein Startzeitpunkt mitgeteilt an dem der Lenkflugkörper 2 gestartet werden soll.

Anhand dieser Daten bestimmt das Prozessmittel 22 in Schritt 54 aus dem Datenspeicher 24 eine Trajektorie 40a, mit der das Ziel 12 voraussichtlich erreicht werden kann. Diese Trajektorie 40a wird aus einer Interpolation aus denjenigen Trajektorien 40b bestimmt, deren Endpunkte 44b dem Zielpunkt 8a am nächsten kommen. Die Endpunkte 44b sind in Fig. 5 zur Verdeutlichung gefüllt gezeichnet. In der Regel liegt der Zielpunkt 8a zwischen vier Endpunkten 44b von vier Trajektorien 40b. Aus allen oder einigen diesen Trajektorien 40b wird die Trajektorie 40a aus einer Interpolation aus den Trajektorien 40b errechnet. Die Interpolation kann anhand einer Interpolation der Koeffizienten der Trajektorien 40b erfolgen, z.B. der Polynomkoeffizienten.

Aus den Bahndaten zu dieser neuen Trajektorie 40a ist die Flugzeit des Lenkflugkörpers 2 bis zum Endpunkt 44a der Trajektorie 40a bekannt. Aus der Flugzeit, der Startzeit, dem Ort und der Bewegung des Ziels 12 kann das Prozessmittel 22 nun den voraussichtlichen den Zielpunkt 8a, an dem der Flugkörper 2 das entgegenkommende Ziel 12 treffen wird, korrigieren. Dieser korrigierte voraussichtlichen Zielpunkt 8a ist aus Gründen der Übersichtlichkeit in Fig. 5 nicht eingezeichnet. Da der Endpunkt 44a der zunächst gewählten Trajektorie 40a eventuell nicht ausreichend genau mit diesem korrigierten voraussichtlichen Zielpunkt 8a zusammentrifft, wird das Prozessmittel 22 in Schritt 56 die Trajektorie 40a korrigieren, so dass deren Endpunkt 44a näher am voraussichtlichen Zielpunkt 8a liegt. Dieser Prozess wird iterativ wiederholt, bis der Endpunkt 44a einer gewählten Trajektorie 40a ausreichend nahe am berechneten Zielpunkt 8a liegt.

Ein Iterationsverfahren zur Bestimmung der optimalen Trajektorie 40a ist in Fig. 4 dargestellt. Die Iteration beginnt nach dem Schritt 54, in dem beispielsweise eine Trajektorie 40a durch Interpolation bestimmt wurde. Aus der neuen Trajektorie 40a wird vom Prozessmittel 22 in Schritt 58 die Flugzeit bis zum Erreichen des Zielpunkts 8a berechnet. Anhand der Flugzeit wird im Schritt 60 der Zielpunkt 8a korrigiert, der sich aus der Bewegung des Ziels 12 und der neuen Flugzeit der Trajektorie 40b ergibt. In einem anschließenden Schritt 62 wird geprüft, ob der Endpunkt der Trajektorie 44b nahe genug am Zielpunkt 8a liegt. Ist dies der Fall, wie in Fig. 5 dargestellt ist, so ist der Iterationsprozess beendet. Ansonsten wird die Iterationsschleife erneut durchlaufen.

Nun kann ein Startfreigabezeichen vom Prozessmittel 22 an das Startgerät 6 oder die Feuerleitstelle 14 gegeben werden und der Lenkflugkörper 2 kann im Schritt 64 gestartet werden. Es ist auch möglich, den Lenkflugkörper 2 vor einer Zieleinweisung zu starten und dem Lenkflugkörper 2 das Ziel 12 während einer ersten Phase des Flugs mitzuteilen, sodass die Schritte 54 bis 62 während des Flugs erfolgen.

Im Verlauf des Flugs wird der Lenkflugkörper 2 vom Prozessmittel 22 entlang der Trajektorie gesteuert (Schritt 66). Für die Steuerung des Lenkflugkörpers 2 entlang der Trajektorie werden die Position, die Geschwindigkeit und die Lage des Lenkflugkörpers 2 im Raum inklusive der Rolllage über lenkflugkörpereigene Sensoren erfasst. Außerdem wird das Prozessmittel 22 während des Flugs über eine Funkverbindung zum Startgerät 6 oder zur Feuerleitstelle 14 mit Zieldaten versorgt, (Schritt 68), beispielsweise mit Hilfe des Sensors 16, wie der Zielposition, der Zielgeschwindigkeit und der Flugrichtung des Ziels 12. Diese Informationen werden mit einer niedrigen Übertragungsrate übertragen. Mit Hilfe eines Kalman Filters erfolgt eine Zielzustandsschätzung, so dass auch in den Sendepausen der Funkverbindung fortwährend geschätzte Größen vorhanden sind. Das Kalman Filter wird als Singer Filter neunter Ordnung angesetzt, d.h. die vektorielle Position, Geschwindigkeit und Beschleunigung des Ziels 12 in Referenzkoordinaten werden als Zustandsgrößen verwendet.

Mit den Ergebnissen der Zustandsschätzung und der abgeschätzten Restflugzeit kann eine Vorhersage des voraussichtlichen Zielpunkts 8a gemacht werden. Über die Zeit kann eine Klassifizierung des Ziels erfolgen, z.B. kann eine ballistische Flugbahn auf ein ballistisches Ziel 12 hindeuten, oder eine charakteristische Querbeschleunigung auf einen bekannten Zieltyp. Durch eine solche Klassifizierung kann später der Zielpunkt besser vorhergesagt werden.

Geht aus dem Zielpunkt 8a im Laufe des Flugs hervor, dass der Zielpunkt 8a aufgrund unvorhergesehener Umstände, beispielsweise Flugmanöver des Ziels 12, nicht mehr korrekt ist, so ist die Trajektorie 40a anzupassen oder es ist eine neue Trajektorie 40 zu wählen. Dies geschieht wiederum in einem iterativen Prozess, wie in Fig. 4 dargestellt ist. Nachdem in Schritt 68 die neuen Zieldaten übergeben wurden, wird vom Prozessmittel 22 in Schritt 70 ein neuer voraussichtlicher Zielpunkt 8b berechnet. Dann wird überprüft, ob der voraussichtliche Zielpunkt 8b noch ausreichend nah am Endpunkt der Trajektorie 40a ist. Dies sei durch ein Flugmanöver des Ziels 12 nicht mehr der Fall. Der neue voraussichtliche Zielpunkt liegt beispielsweise etwa 64 km in der Horizontalen und knapp 5 km in der Vertikalen vom Startpunkt 42 entfernt, wobei die Entfernung der Zielpunkte 8a und 8b voneinander der besseren Darstellbarkeit halber wesentlich weiter dargestellt ist, als es gewöhnlich der Fall ist. Bei einer Weitersteuerung des Lenkflugkörpers auf Trajektorie 40a wird der Lenkflugkörper 2 das Ziel 12 verfehlen.

Infolgedessen muss die Flugbahn 4 des Lenkflugkörpers 2 angepasst werden (Schritt 72). Dies geschieht durch Iteration, wie oben beschrieben. Gegebenenfalls wird vor der Iteration eine neue Interpolation gesetzt, wenn der Zielpunkt 8b nahe an den Endpunkten 44 anderer Trajektorien 40 liegt, wie in Fig. 5 angedeutet ist. Nach der eventuellen Interpolation und nach Durchlaufen von gegebenenfalls mehreren Iterationsschleifen, sind die Trajektorie 40c und der neue Zielpunkt 8b ausreichend genau aneinander angepasst und der Lenkflugkörper 2 kann auf die neue Trajektorie 40c im Schritt 74 gesteuert werden. Dieser Prozess des Anpassens der Trajektorien 40 an den sich verändernden Zielpunkt 8 kann während des Anflugs auf das Ziel 12 stetig wiederholt werden, und zwar in dem Maße, wie aktualisierte Zieldaten vorliegen.

Ist der Lenkflugkörper 2 nahe genug an das Ziel 20 gekommen, so kann der Suchkopf 26 - nachdem die Haube 28 abgesprengt und der Dom 30 freigelegt wurde - das Ziel 12 beispielsweise visuell erfassen. Ist das Ziel 12 erfasst, wie in der Prüfung 76 festgestellt wird, kann das Prozessmittel 22 den Steuermodus ändern (Schritt 78) und nun optisch das Ziel in Schritt 80 ansteuern.

Zur Bestimmung der Restflugzeit kann das Prozessmittel 22 - wie in Fig. 4 angedeutet ist - auf zwei Methoden zurückgreifen. Es kann die Planflugzeit 80 bestimmen, die sich aus der Gesamtflugzeit, die mit der Trajektorie 40 angegeben ist oder bei einer Anpassung der Trajektorie 40 errechnet werden kann, abzüglich der bereits geflogenen Zeit ergibt. Auf der anderen Seite kann durch die Fluggeschwindigkeit des Lenkflugkörpers 2, die dem Prozessmittel 22 aus Sensordaten bekannt ist, beispielsweise durch INS-GPS-Kopplung (Intertialsystem-Global-Positioning-System), die Anflugzeit 84 bis zum Zielpunkt 8 errechnet werden. Diese ergibt sich aus der geradlinigen Entfernung des Lenkflugkörpers 2 zum voraussichtlichen Zielpunkt 8. Da dem Prozessmittel 22 auch der momentane Standort des Lenkflugkörpers 2 bekannt ist, kann diese Entfernung berechnet werden. Die Anflugzeit 84 ergibt sich aus der Entfernung geteilt durch die Geschwindigkeit des Lenkflugkörpers 2.

Eine genauere Berechnung der Anflugzeit 84 ist möglich, wenn die Entfernung entlang der zu fliegenden Trajektorie 40 zum Zielpunkt 8 als Berechnungsgrundlage verwendet wird. Als weitere Verbesserung kann als Geschwindigkeit die Geschwindigkeitsfunktion aus der Trajektorie 40 verwendet werden kann, da die Geschwindigkeit in der Regel nicht konstant bleibt bis zum Zielpunkt 8. Die Geschwindigkeiten des Lenkflugkörpers 2 bis zum Zielpunkt 8 können aus der gemessenen Geschwindigkeit unter Verwendung der Geschwindigkeitsfunktion berechnet werden. Auch die Geschwindigkeitsfunktion, beispielsweise in Abhängigkeit von der Flugzeit oder dem Flugort, kann Bestandteil der Bahndaten sein. Die Berechnung der Restzeit kann vereinfacht werden, wenn die Bahndaten zu mehreren Stützstellen die jeweilige Planflugzeit bis zum Zielpunkt 8 enthalten. Die Planflugzeit kann so mit einer von der Position des Lenkflugkörpers 2 abhängigen Interpolation zwischen zwei Planflugzeiten von den zwei benachbarten Stützstellen errechnet werden.

Zweckmäßigerweise bestimmt das Prozessmittel 22 die Restflugzeit sowohl aus der Planflugzeit 82 als auch aus der Anflugzeit 84, und zwar insbesondere aus einer Wichtung dieser beiden Zeiten. Hierbei wird die Anflugzeit 84 immer stärker gewichtet, je näher der Lenkflugkörper 2 dem voraussichtlichen Zielpunkt 8 kommt. Eine entsprechende Wichtungsfunktion kann ebenfalls im Datenspeicher 24 oder in einem Datenspeicher des Prozessmittels 22 hinterlegt sein.

### Bezugszeichenliste

- 2: Lenkflugkörper
- 4: Flugbahn
- 6: Startgerät
- 8: Zielpunkt
- 8a: Zielpunkt
- 8b: Zielpunkt
- 10: Landschaft
- 12: Ziel
- 14: Feuerleitstelle
- 16: Sensor
- 18: Triebwerk
- 20: Wirkladung
- 22: Prozessmittel
- 24: Datenspeicher
- 26: Suchkopf
- 28: Haube
- 30: Dom
- 32: Aktuator
- 34: Leitflügel
- 36: Daten des Lenkflugkörpers
- 38: Ladungsdaten
- 40: Trajektorie
- 40a: Trajektorie
- 40b: Trajektorie
- 40c: Trajektorie
- 42: Startpunkt
- 44: Endpunkt
- 46: Trajektorie berechnen
- 48: Bahndaten speichern
- 50: Lenkflugkörper laden
- 52: Ziel zuweisen
- 54: Trajektorie auswählen
- 56: Trajektorie anpassen
- 58: Flugzeit berechnen
- 60: Zielpunkt berechnen
- 62: Prüfung
- 64: Start
- 66: Steuerung entlang der Trajektorie
- 68: Zieldaten übergeben
- 70: Zielpunkt berechnen
- 72: Trajektorie anpassen
- 74: Lenkflugkörper steuern
- 76: Prüfung
- 78: Steuermodus ändern
- 80: Ziel ansteuern
- 82: Planflugzeit
- 84: Anflugzeit

## Patentansprüche

1. Verfahren zum Steuern eines Lenkflugkörpers (2), der ein Prozessmittel (22) und einen Datenspeicher (24) aufweist, bei dem das Prozessmittel (22) Steuerdaten zur Steuerung des Lenkflugkörpers (2) auf einer Flugbahn (4) abruft und den Flug des Lenkflugkörpers (2) unter Verwendung der Steuerdaten steuert (66, 74),
**dadurch gekennzeichnet,**
**dass** im Datenspeicher (24) Flugbahn (4) beschreibende Bahndaten zu einer Mehrzahl von unterschiedlichen Flugbahnen (4) abgelegt sind und das Prozessmittel (22) unter Verwendung von Zieldaten Bahndaten zu einer der mehreren Flugbahnen (4) als die Steuerdaten aus dem Datenspeicher (24) auswählt (54).

2. Verfahren nach Anspruch 1,
**dadurch gekennzeichnet,**
**dass** die Bahndaten vor einem Einsatz des Lenkflugkörpers (2) aus einem Startpunkt (42) und einem Endpunkt (44) und einem Modell des Lenkflugkörpers (2) und Bedingungen zum Auftreffen des Lenkflugkörpers (2) im Ziel (12) errechnet und im Datenspeicher (24) abgelegt werden.

3. Verfahren nach Anspruch 1 oder 2,
**dadurch gekennzeichnet,**
**dass** die Bahndaten jeweils die Trajektorien (40) der ihnen zugeordneten Flugbahn enthalten.

4. Verfahren nach einem der vorhergehenden Ansprüche,
**dadurch gekennzeichnet,**
**dass** die Bahndaten, die im Datenspeicher (24) abgelegt sind, Bahndaten zu Flugbahnen (4) sind, die von einem einzigen Startpunkt (42) zu einem Raumraster von Zielpunkten (44) führen.

5. Verfahren nach einem der vorhergehenden Ansprüche,
**dadurch gekennzeichnet,**
**dass** das Prozessmittel (22) die Bahndaten anhand eines Zielpunkts (8, 8a, 8b) aus dem Datenspeicher (24) auswählt und die Bahndaten anschließend so modifiziert, dass sie als neue Bahndaten eine veränderte Flugbahn (40b, 40d) beschreiben, und das Prozessmittel (22) den Flug des Lenkflugkörpers (2) anhand der neuen Bahndaten steuert.

6. Verfahren nach einem der vorhergehenden Ansprüche,
**dadurch gekennzeichnet,**
**dass** die Bahndaten die Gesamtflugzeit des Lenkflugkörpers (2) zu einem voraussichtlichen Zielpunkt (8) beinhalten und das Prozessmittel (22) während des Flugs die Restflugzeit anhand der Gesamtflugzeit ermittelt und den voraussichtlichen Zielpunkt (8, 8a, 8b) in Abhängigkeit von der Restflugzeit neu bestimmt.

7. Verfahren nach einem der vorhergehenden Ansprüche,
**dadurch gekennzeichnet,**
**dass** das Prozessmittel (22) die Bahndaten während des Flugs des Lenkflugkörpers (2) anhand eines neuen Zielpunkts (8a, 8b) so modifiziert, dass die Bahndaten eine veränderte Flugbahn (40b, 40d) beschreiben, und das Prozessmittel (22) den Flug des Lenkflugkörpers (2) anhand der neuen Bahndaten steuert.

8. Verfahren nach einem der vorhergehenden Ansprüche,
**dadurch gekennzeichnet,**
**dass** sich während des Flugs des Lenkflugkörpers (2) ein voraussichtlicher Zielpunkt (8b) im Raum verändert und das Prozessmittel (22) während des Flugs andere Bahndaten zu einer anderen Flugbahn (40c) aus dem Datenspeicher (24) auswählt, deren Zieldaten näher am voraussichtlichen Zielpunkt (8b) liegen, als die Zieldaten der zuvor ausgewählten Bahndaten, und den Lenkflugkörper (2) unter Verwendung der anderen Bahndaten steuert.

9. Verfahren nach einem der vorhergehenden Ansprüche,
**dadurch gekennzeichnet,**
**dass** die Bahndaten die Gesamtflugzeit des Lenkflugkörpers (2) zu einem voraussichtlichen Zielpunkt (8) beinhalten und das Prozessmittel (22) während des Flugs die Restflugzeit zum Zielpunkt (8) anhand einer Wichtung aus einer Planflugzeit (82), die die Gesamtflugzeit abzüglich der geflogenen Zeit ist, und einer Anflugzeit (84) bestimmt, die mit Hilfe von Sensordaten eines Sensors des Lenkflugkörpers (2) ermittelt wurde.

10. Vorrichtung zum Steuern eines Lenkflugkörpers (2) mit einem Datenspeicher (24) und einem Prozessmittel (22), das dazu vorbereitet ist, Steuerdaten zur Steuerung des Lenkflugkörpers (2) auf einer Flugbahn (4) aus dem Datenspeicher (24) abzurufen und den Flug des Lenkflugkörpers (2) anhand der Bahndaten zu steuern (66, 74),
**dadurch gekennzeichnet,**
**dass** im Datenspeicher (24) Flugbahn (4) beschreibende Bahndaten zu einer Mehrzahl von unterschiedlichen Flugbahnen (4) abgelegt sind und das Prozessmittel (22) dazu vorbereitet ist, unter Verwendung von Zieldaten Bahndaten zu einer der mehreren Flugbahnen (4) als die Steuerdaten auszuwählen (54).

## Claims

1. Method for controlling a guided missile (2) having a process means (22) and a data memory (24), in which the process means (22) retrieves control data for controlling the guided missile (2) on a flight path (4) and controls (66, 74) the flight of the guided missile (2) using the control data,
**characterized**
**in that** path data describing the flight path (4) are stored for a plurality of different flight paths (4) in the data memory (24), and the process means (22) selects (54) path data relating to one of the plurality of flight paths (4) as the control data from the data memory (24) using target data.

2. Method according to Claim 1,
**characterized**
**in that**, before using the guided missile (2), the path data are calculated from a starting point (42) and an end point (44) and a model of the guided missile (2) and conditions for the guided missile (2) to hit the target (12) and are stored in the data memory (24).

3. Method according to Claim 1 or 2,
**characterized**
**in that** the path data respectively contain the trajectories (40) of the flight path assigned to them.

4. Method according to one of the preceding claims,
**characterized**
**in that** the path data stored in the data memory (24) are path data relating to flight paths (4) which lead from a single starting point (42) to a spatial grid of target points (44).

5. Method according to one of the preceding claims,
**characterized**
**in that** the process means (22) selects the path data from the data memory (24) on the basis of a target point (8, 8a, 8b) and then modifies the path data in such a manner that they describe a changed flight path (40b, 40d) as new path data, and the process means (22) controls the flight of the guided missile (2) on the basis of the new path data.

6. Method according to one of the preceding claims,
**characterized**
**in that** the path data contain the total flight time of the guided missile (2) to a likely target point (8), and the process means (22) determines the remaining flight time on the basis of the total flight time during the flight and newly determines the likely target point (8, 8a, 8b) on the basis of the remaining flight time.

7. Method according to one of the preceding claims,
**characterized**
**in that** the process means (22) modifies the path data on the basis of a new target point (8a, 8b) during the flight of the guided missile (2) in such a manner that the path data describe a changed flight path (40b, 40d), and the process means (22) controls the flight of the guided missile (2) on the basis of the new path data.

8. Method according to one of the preceding claims,
**characterized**
**in that** a likely target point (8b) in space changes during the flight of the guided missile (2), and the process means (22) selects other path data relating to another flight path (40c) from the data memory (24) during the flight, the target data of which are closer to the likely target point (8b) than the target data of the previously selected path data, and controls the guided missile (2) using the other path data.

9. Method according to one of the preceding claims,
**characterized**
**in that** the path data contain the total flight time of the guided missile (2) to a likely target point (8), and the process means (22) determines the remaining flight time to the target point (8) during the flight on the basis of a weighting from a planned flight time (82), which is the total flight time minus the flying time, and an approach time (84) which was determined with the aid of sensor data from a sensor of the guided missile (2).

10. Apparatus for controlling a guided missile (2) having a data memory (24) and a process means (22) which is prepared to retrieve control data for controlling the guided missile (2) on a flight path (4) from the data memory (24) and to control (66, 74) the flight of the guided missile (2) on the basis of the path data,
**characterized**
**in that** path data describing the flight path (4) are stored for a plurality of different flight paths (4) in the data memory (24), and the process means (22) is prepared to select (54) path data relating to one of the plurality of flight paths (4) as the control data using target data.

## Revendications

1. Procédé de commande d'un missile téléguidé (2), lequel possède un moyen de traitement (22) et une mémoire de données (24), avec lequel le moyen de traitement (22) récupère des données de commande servant à commander le missile téléguidé (2) sur une trajectoire de vol (4) et commande (66, 74) le vol du missile téléguidé (2) en utilisant les données de commande,
**caractérisé en ce**
**que** des données de trajectoire décrivant la trajectoire de vol (4) à propos d'une pluralité de trajectoires de vol (4) différentes sont stockées dans la mémoire de données (24) et le moyen de traitement (22), en utilisant des données de cible, sélectionne (54) en tant que données de commande à partir de la mémoire de données (24) des données de trajectoire à propos de l'une de la pluralité de trajectoires de vol (4).

2. Procédé selon la revendication 1, **caractérisé en ce que** les données de trajectoire sont calculées avant une utilisation du missile téléguidé (2) à partir d'un point de départ (42) et d'un point final (44) et d'un modèle du missile téléguidé (2) et de conditions d'impact du missile téléguidé (2) sur la cible (12), puis sont stockées dans la mémoire de données (24).

3. Procédé selon la revendication 1 ou 2, **caractérisé en ce que** les données de trajectoire contiennent respectivement les trajectoires (40) de la trajectoire de vol qui lui est associée.

4. Procédé selon l'une des revendications précédentes,
**caractérisé en ce que** les données de trajectoire qui sont stockées dans la mémoire de données (24) sont des données de trajectoire à propos de trajectoires de vol (4) qui mènent d'un point de départ (42) unique à une grille dans l'espace de points visés (44) .

5. Procédé selon l'une des revendications précédentes,
**caractérisé en ce que** le moyen de traitement (22) sélectionne les données de trajectoire à partir de la mémoire de données (24) à l'aide d'un point visé (8, 8a, 8b) et modifie ensuite les données de trajectoire de telle sorte que, en tant que nouvelles données de trajectoire, elles décrivent une trajectoire de vol modifiée (40b, 40d), et le moyen de traitement (22) commande le vol du missile téléguidé (2) à l'aide des nouvelles données de trajectoire.

6. Procédé selon l'une des revendications précédentes,
**caractérisé en ce que** les données de trajectoire contiennent le temps de vol total du missile téléguidé (2) jusqu'à un point visé (8) probable et le moyen de traitement (22) détermine, pendant le vol, le temps de vol restant à l'aide du temps de vol total et redétermine le point visé (8, 8a, 8b) probable en fonction du temps de vol restant.

7. Procédé selon l'une des revendications précédentes,
**caractérisé en ce que** le moyen de traitement (22) modifie les données de trajectoire pendant le vol du missile téléguidé (2) à l'aide d'un nouveau point visé (8a, 8b) de telle sorte que les données de trajectoire décrivent une trajectoire de vol modifiée (40b, 40d) et le moyen de traitement (22) commande le vol du missile téléguidé (2) à l'aide des nouvelles données de trajectoire.

8. Procédé selon l'une des revendications précédentes,
**caractérisé en ce qu'**un point visé (8b) probable dans l'espace se modifie pendant le vol du missile téléguidé (2) et le moyen de traitement (22) sélectionne pendant le vol, à partir de la mémoire de données (24), d'autres données de trajectoire à propos d'une autre trajectoire de vol (40c) dont les données de cible se trouvent plus proches du point visé (8b) probable que les données de cible des trajectoires de vol sélectionnées précédemment et commande le missile téléguidé (2) en utilisant les autres données de trajectoire.

9. Procédé selon l'une des revendications précédentes,
**caractérisé en ce que** les données de trajectoire contiennent le temps de vol total du missile téléguidé (2) jusqu'à un point visé (8) probable et le moyen de traitement (22) détermine, pendant le vol, le temps de vol restant jusqu'au point visé (8) à l'aide d'une pondération d'un temps de vol planifié (82) qui est le temps de vol total moins le temps de vol écoulé, et d'un temps de vol d'approche (84), lequel a été déterminé à l'aide de données de capteur d'un capteur du missile téléguidé (2) .

10. Dispositif pour commander un missile téléguidé (2) comprenant une mémoire de données (24) et un moyen de traitement (22), lequel est préparé pour récupérer à partir de la mémoire de données (24) des données de commande servant à commander le missile téléguidé (2) sur une trajectoire de vol (4) et pour commander (66, 74) le vol du missile téléguidé (2) à l'aide des données de trajectoire,
**caractérisé en ce**
**que** des données de trajectoire décrivant la trajectoire de vol (4) à propos d'une pluralité de trajectoires de vol (4) différentes sont stockées dans la mémoire de données (24) et le moyen de traitement (22) est préparé pour, en utilisant des données de cible, sélectionner (54) en tant que données de commande des données de trajectoire à propos de l'une de la pluralité de trajectoires de vol (4).
